# EUROPÄISCHE PATENTSCHRIFT

(11) **EP 2 425 906 B1**
(45) Veröffentlichungstag und Bekanntmachung des Hinweises auf die Patenterteilung: **05.06.2013**
(21) Anmeldenummer: 11176418.9
(22) Anmeldetag: 03.08.2011
(51) Int. Cl.: B21C 37/15, F16L 9/18

(54) **Doppelwandiges Rohr und Verfahren zu seiner Herstellung**
Double wall pipe and its method of manufacturing
Tuyau à double paroi et sa méthode de fabrication

(30) Priorität: 03.09.2010 DE 102010040249
(43) Veröffentlichungstag der Anmeldung: 07.03.2012
(73) Patentinhaber: MAN Diesel & Turbo SE, 86153 Augsburg (DE)
(72) Erfinder: Graf, Hans-Peter, 86441 Zusmarshausen (DE); Hühn, Stefan, 86169 Augsburg (DE)

(56) Entgegenhaltungen:
- WO-A1-2005/061142
- DE-A1- 4 437 380
- US-A- 3 343 250

## Beschreibung

Die Erfindung betrifft ein doppelwandiges Rohr und ein Verfahren zum Herstellen eines doppelwandigen Rohrs gemäß dem Oberbegriff des Anspruchs 1 bzw. 6 sowie eine Verwendung eines solchen doppelwandigen Rohrs.

Aus WO 2005/061142 A1 sind ein doppelwandiges Rohr und ein Verfahren zum Herstellen eines doppelwandigen Rohrs der eingangsgenannten Art bekannt, wobei das doppelwandige Rohr als Abgasleitung für eine Verbrennungskraftmaschine verwendet wird. Gemäß diesem Dokument ist jedes sich in einem Zwischenraum zwischen Außenrohr und Innenrohr befindende Distanzelement aus Kunststoff, wie insbesondere Polyethylen, hergestellt und wird nach einem quer zu einer Axialrichtung Biegen des doppelwandigen Rohrs wieder aus dem Zwischenraum entfernt. Das Entfernen jedes Distanzelements geschieht hier bevorzugt durch rückstandsfreie Verbrennung in Folge der hohen Temperatur von durch das doppelwandige Rohr hindurchgeleitetem Abgas.

Problematisch hieran ist, dass durch die bei der Verbrennung entstehenden Gase die Umwelt belastet wird.

Der Erfindung liegt die Aufgabe zugrunde, ein doppelwandiges Rohr sowie ein Verfahren zum Herstellen eines doppelwandigen Rohrs bereitzustellen, wobei eine derartige Umweltbelastung vermieden wird. Der Erfindung liegt ferner die Aufgabe zugrunde, eine vorteilhafte Verwendung für ein solches doppelwandiges Rohr bereitzustellen.

Die o.g. Aufgaben werden mit einem doppelwandigen Rohr gemäß Anspruch 1, einer Verwendung gemäß Anspruch 5 sowie mit einem Verfahren gemäß Anspruch 6 gelöst. Weiterbildungen der Erfindung sind in den jeweils abhängigen Ansprüchen definiert.

Gemäß einem ersten Aspekt der Erfindung weist ein doppelwandiges Rohr ein Außenrohr, das einen Innendurchmesser hat, und ein Innenrohr auf, das einen Außendurchmesser hat und das innerhalb des Innendurchmessers des Außenrohrs angeordnet ist, so dass zwischen dem Innendurchmesser des Außenrohrs und dem Außendurchmesser des Innenrohrs ein rohrförmiger Zwischenraum gebildet ist, wobei entlang einer Axialrichtung des doppelwandigen Rohrs wenigstens eine Biegestelle vorgesehen ist, an der ein den Zwischenraum radial ausfüllendes Distanzelement zwischen Innenrohr und Außenrohr vorgesehen ist, und wobei jedes Distanzelement in Axialrichtung nur einen Teil des Zwischenraums ausfüllt. Das erfindungsgemäße doppelwandige Rohr zeichnet sich dadurch aus, dass jedes Distanzelement von offenporigem Metallschaum gebildet ist.

Dadurch, dass gemäß der Erfindung jedes Distanzelement von Metallschaum, wie z.B Metallschaum aus Nichteisenmetall (wie z.B. Aluminium oder Kupfer) und/oder aus Eisenmetall (z.B. Stahl), gebildet ist, wird das Distanzelement bei Wärmebelastung nicht verbrennen bzw. ausgasen und es kommt zu keiner entsprechenden Umweltbelastung.

Dadurch, dass die vorgesehenen Distanzelemente in dem Zwischenraum verbleiben und damit dauerhaft eine stabilisierende Wirkung auf die Wandungen von Innenrohr und Außenrohr haben, können die Wandungen mit einer geringeren Dickenabmessung ausgeführt sein, was zu Materialeinsparungen und damit Gewichts- und Kosteneinsparungen führt. Ferner werden durch die geringeren Wandstärken die zum Biegen des Rohrs aufzuwendenden Biegekräfte erheblich reduziert.

Durch die metallische Ausbildung jedes Distanzelements kommt es zwischen Innenrohr und Außenrohr zu keinem relevanten Längenausdehnungs-Unterschied, was die Montagevorkehrungen für das doppelwandige Rohr vereinfacht.

Durch die Offenporigkeit ist der Metallschaum mediendurchlässig und stellt damit keine Strömungsbarriere für ein axial durch den Zwischenraum hindurchströmendes Medium, wie Gas oder Flüssigkeit, dar.

Daher kann das doppelwandige Rohr gemäß einer Ausführungsform der Erfindung entlang der Axialrichtung mit einem Leckage-Detektionsanschluss, insbesondere einem einzigen Leckage-Detektionsanschluss, versehen sein, so dass ein Medienübertritt von einen Innenraum des Innenrohrs in den Zwischenraum detektierbar ist.

Bevorzugt ist der Leckage-Detektionsanschluss als Öffnung in der Wandung des Außenrohrs ausgebildet, wobei an die Öffnung ein Mediensensor, wie z.B. ein Flüssigkeitsensor oder ein Gassensor, angeschlossen ist.

Gemäß noch einer weiteren Ausführungsform des erfindungsgemäßen doppelwandigen Rohrs weist das Außenrohr einen Außendurchmesser von größer 70 mm, insbesondere von größer 100 mm, auf.

Damit kann das erfindungsgemäße doppelwandige Rohr auch für im Durchmesser große gebogene Medienleitungen, wie z.B. Medienleitungen von Großdieselmotoren oder großen Turbomaschinen, verwendet werden.

Gemäß einem zweiten Aspekt der Erfindung wird das doppelwandige Rohr gemäß einer, mehreren oder allen zuvor beschriebenen Ausführungsformen der Erfindung in jeder denkbaren Kombination als Fluidleitung bzw. Flüssigkeitsleitung verwendet.

Gemäß einem dritten Aspekt der Erfindung weist ein Verfahren zum Herstellen eines doppelwandigen Rohrs die folgenden Schritte auf: Bereitstellen eines Außenrohrs, das einen Innendurchmesser aufweist, Bereitstellen eines Innenrohrs, das einen Außendurchmesser aufweist, Anordnen des Innenrohrs innerhalb des Innendurchmessers des Außenrohrs, so dass zwischen dem Innendurchmesser des Außenrohrs und dem Außendurchmesser des Innenrohrs ein rohrförmiger Zwischenraum gebildet wird, Anordnen eines den Zwischenraum radial ausfüllenden Distanzelements zwischen Innenrohr und Außenrohr an wenigstens einer Stelle entlang einer Axialrichtung des doppelwandigen Rohrs, wobei jedes Distanzelement in Axialrichtung nur einen Teil des Zwischenraums ausfüllt, und Biegen des doppelwandigen Rohrs quer zur Axialrichtung an wenigstens einer mit Distanzelement versehenen Stelle. Das erfindungsgemäße Verfahren zeichnet sich dadurch aus, dass jedes Distanzelement aus offenporigem Metallschaum hergestellt wird. Am Rohranfang kann das Innenrohr mit dem Außenrohr verschweißt sein. Die Distanz der Durchmesser kann durch Aufweiten, Einziehen oder mittels eines Ringdeckels dargestellt werden.

Dadurch, dass gemäß der Erfindung jedes Distanzelement aus Metallschaum, wie z.B. Metallschaum aus Nichteisenmetall (wie z.B. Aluminium oder Kupfer) und/oder aus Eisenmetall (z.B. Stahl), hergestellt wird, wird das Distanzelement bei Wärmebelastung nicht verbrennen bzw. ausgasen und es kommt zu keiner entsprechenden Umweltbelastung. Mit anderen Worten kann gemäß einer Ausführungsform des erfindungsgemäßen Verfahrens jedes Distanzelement dauerhaft in dem Zwischenraum belassen werden.

Dadurch, dass die vorgesehenen Distanzelemente in dem Zwischenraum verbleiben und damit dauerhaft eine stabilisierende Wirkung auf die Wandungen von Innenrohr und Außenrohr haben, können die Wandungen mit einer geringeren Dickenabmessung ausgeführt werden, was zu Materialeinsparungen und damit Gewichts- und Kosteneinsparungen führt. Ferner werden durch die geringeren Wandstärken die beim Biegen des Rohrs aufzuwendenden Biegekräfte erheblich reduziert.

Durch die metallische Ausbildung jedes Distanzelements kommt es zwischen Innenrohr und Außenrohr zu keinem relevanten Längenausdehnurigs-Unterschied, was die Montagevorkehrungen für das doppelwandige Rohr vereinfacht.

Durch die Offenporigkeit ist der Metallschaum mediendurchlässig und stellt damit keine Strömungsbarriere für ein axial durch den Zwischenraum hindurchströmendes Medium, wie Gas oder Flüssigkeit, dar.

Daher kann gemäß einer Ausführungsform des erfindungsgemäßen Verfahrens das doppelwandige Rohr entlang der Axialrichtung mit einem Leckage-Detektionsanschluss, insbesondere einem einzigen Leckage-Detektionsanschluss, versehen werden, so dass ein Medienübertritt vom Innenraum des Innenrohrs in den Zwischenraum detektierbar ist.

Bevorzugt wird der Leckage-Detektionsanschluss als Öffnung in der Wandung des Außenrohrs hergestellt, wobei an die Öffnung ein Mediensensor, wie z.B. ein Flüssigkeitsensor oder ein Gassensor, angeschlossen wird.

Gemäß einer weiteren Ausführungsform des erfindungsgemäßen Verfahrens wird das Außenrohr mit einem Außendurchmesser von größer 70 mm, insbesondere größer 100 mm, bereitgestellt.

Damit kann das erfindungsgemäße doppelwandige Rohr auch für im Durchmesser große gebogene Medienleitungen, wie z.B. Medienleitungen von Großdieselmotoren oder großen Turbomaschinen, verwendet werden.

Im Folgenden wird die Erfindung anhand einer bevorzugten Ausführungsform und unter Bezugnahme auf die beigefügte Figur detaillierter beschrieben.

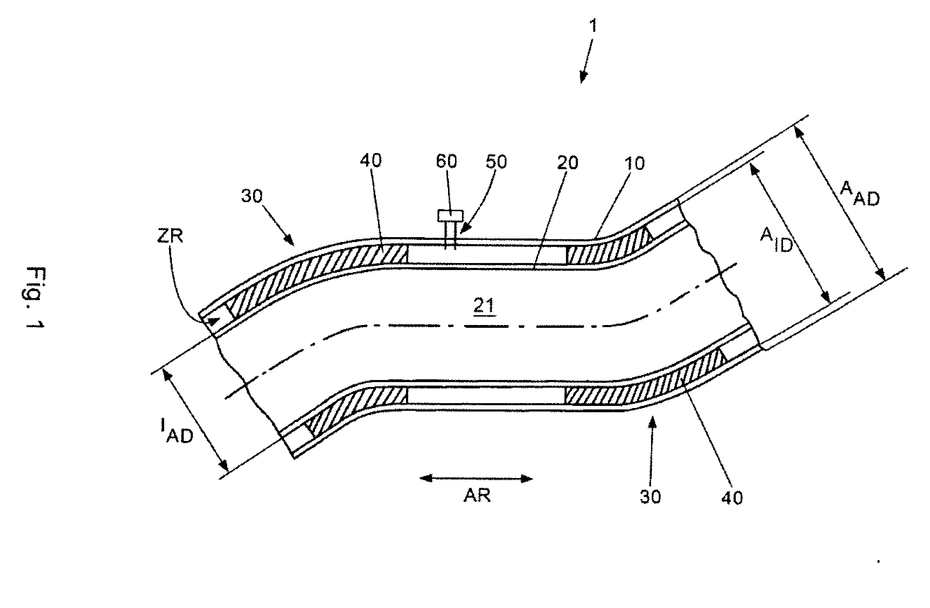

- Fig. 1: zeigt eine schematische Schnittansicht eines gebogenen doppelwandigen Rohrs gemäß einer Ausführungsform der Erfindung.

Wie in Fig. 1 gezeigt, weist gemäß einer Ausführungsform der Erfindung ein doppelwandiges Rohr 1 ein metallisches Außenrohr 10, das einen vorbestimmten Innendurchmesser A_{ID} hat, und ein metallisches Innenrohr 20 auf, das einen vorbestimmten Außendurchmesser I_{AD} hat und das innerhalb des Innendurchmessers A_{ID} des Außenrohrs 10 angeordnet ist, so dass zwischen dem Innendurchmesser A_{ID} des Außenrohrs 10 und dem Außendurchmesser I_{AD} des Innenrohrs 20 ein rohrförmiger Zwischenraum ZR gebildet ist.

Entlang einer Axialrichtung AR des doppelwandigen Rohrs 1 sind eine Mehrzahl von Biegestellen 30 (hier zwei Biegestellen 30) vorgesehen, an denen jeweils ein den Zwischenraum ZR radial ausfüllendes ringförmiges bzw. rohrförmiges Distanzelement 40 zwischen Innenrohr 20 und Außenrohr 10 eingebracht ist, wobei jedes Distanzelement 40 in Axialrichtung AR nur einen Teil des Zwischenraums ZR ausfüllt.

Das Distanzelement 40 kann auch an geraden Teilstücken des Rohrs 1 verwendet werden, um eine mechanische Abstützung des Innenrohrs 20 zu ermöglichen, insbesondere bei langen Rohrleitungen. Das Distanzelement 40 kann aber auch verwendet werden, um das (Eigen-) Schwingungsverhalten von Innen- und Außenrohr gezielt zu beeinflussen.

Gemäß der Erfindung ist jedes Distanzelement 40 von offenporigem Metallschaum gebildet, wobei der Metallschaum aus Nichteisenmetall (wie z.B. Aluminium oder Kupfer) und/oder aus Eisenmetall (z.B. Stahl), hergestellt ist.

Verfahren zum Herstellen von Metallschaum bzw. von Formteilen aus Metallschaum sind z.B. in DE 197 34 394 A1, DE 43 26 982 C1 und EP 0 804 982 B1 beschrieben.

Das Außenrohr 10 weist einen Außendurchmesser A_{AD} auf, der deutlich größer als 70 mm ist, wie z.B. größer als 100 mm.

Entlang der Axialrichtung AR ist als Öffnung in der Wandung des Außenrohrs 10 ein einziger Leckage-Detektionsanschluss 50 vorgesehen, an den ein mit einer Auswertevorrichtung (nicht dargestellt) signalgekoppelter Mediensensor 60 angeschlossen ist, so dass ein Medienübertritt von einem mediumdurchströmten Innenraum 21 des Innenrohrs 20 aus in den Zwischenraum ZR hinein detektierbar ist.

Das doppelwandige Rohr 1 kann somit als Fluidleitung oder Flüssigkeitsleitung mit Leckageerkennung verwendet werden.

Zur Herstellung des erfindungsgemäßen doppelwandigen Rohrs 1 sind zumindest die folgenden Verfahrensschritte vorgesehen: Bereitstellen des Außenrohrs 10, Bereitstellen des Innenrohrs 20, Anordnen des Innenrohrs 20 innerhalb des Innendurchmessers A_{ID} des Außenrohrs 10, so dass zwischen dem Innendurchmesser A_{ID} des Außenrohrs 10 und dem Außendurchmesser I_{AD} des Innenrohrs 20 der rohrförmige Zwischenraum ZR gebildet wird, Anordnen eines Distanzelements 40 zwischen Innenrohr 20 und Außenrohr 10 an jeder für eine Biegung vorgesehene Stelle (Biegestelle 30) des doppelwandigen Rohrs 1, wobei alle benötigten Distanzelemente 40 aus offenporigem Metallschaum hergestellt werden, und Biegen des doppelwandigen Rohrs 1 quer zur Axialrichtung AR an jeder für eine Biegung vorgesehene Stelle, so dass eine Biegestelle 30 entsteht.

Bevorzugt wird (z.B. nach dem Biegen oder schon beim Bereitstellen des Außenrohrs 10) entlang der Axialrichtung AR der einzige Leckage-Detektionsanschluss 50 in das Außenrohr 10 eingebracht. Bevorzugt nach dem Biegen wird dann der Mediensensor 60 (hier z.B. ein Fluidsensor) an den Leckage-Detektionsanschluss 50 angeschlossen und mit der Auswertevorrichtung mittels elektrischer Leitungen (in Fig.1 nicht gezeigt) signalverbunden.

Der Leckage-Detektionsanschluß kann auch durch Öffnungen in einem stirnseitig angeschweißten Flansch erfolgen.

### Bezugszeichenliste

| | |
|---|---|
| 1 | doppelwandiges Rohr |
| 10 | Außenrohr |
| 20 | Innenrohr |
| 21 | Innenraum |
| 30 | Biegestelle |
| 40 | Distanzelement |
| 50 | Leckage-Detektionsanschluss |
| 60 | Mediensensor |
| AR | Axialrichtung |
| ZR | Zwischenraum |
| I_{AD} | Außendurchmesser des Innenrohrs |
| A_{ID} | Innendurchmesser des Außenrohrs |
| A_{AD} | Außendurchmesser des Außenrohrs |

## Patentansprüche

1. Doppelwandiges Rohr (1) mit einem Außenrohr (10), das einen Innendurchmesser (A_{ID}) aufweist, und einem Innenrohr (20), das einen Außendurchmesser (I_{AD}) aufweist und das innerhalb des Innendurchmessers (A_{ID}) des Außenrohrs (10) angeordnet ist, so dass zwischen dem Innendurchmesser (A_{ID}) des Außenrohrs (10) und dem Außendurchmesser (I_{AD}) des Innenrohrs (20) ein rohrförmiger Zwischenraum (ZR) gebildet ist, wobei entlang einer Axialrichtung (AR) des doppelwandigen Rohrs (1) wenigstens eine Biegestelle (30) vorgesehen ist, an der ein den Zwischenraum (ZR) radial ausfüllendes Distanzelement (40) zwischen Innenrohr (20) und Außenrohr (10) vorgesehen ist, und wobei jedes Distanzelement (40) in Axialrichtung (AR) nur einen Teil des Zwischenraums (ZR) ausfüllt,
**dadurch gekennzeichnet, dass** jedes Distanzelement (40) von offenporigem Metallschaum gebildet ist.

2. Doppelwandiges Rohr (1) gemäß Anspruch 1, wobei entlang der Axialrichtung (AR) ein Leckage-Detektionsanschluss (50), insbesondere ein einziger Leckage-Detektionsanschluss (50), vorgesehen ist, so dass ein Medienübertritt von einen Innenraum (21) des Innenrohrs (20) in den Zwischenraum (ZR) detektierbar ist.

3. Doppelwandiges Rohr (1) gemäß einem der Ansprüche 1 bis 2, wobei das Außenrohr (10) einen Außendurchmesser (A_{AD}) von größer 70 mm aufweist.

4. Doppelwandiges Rohr (1) gemäß Anspruch 3, wobei der Außendurchmesser (A_{AD}) des Außenrohrs (10) größer als 100 mm ist.

5. Verwendung eines doppelwandigen Rohrs (1) gemäß einem der Ansprüche 1 bis 4 als Fluidleitung.

6. Verfahren zum Herstellen eines doppelwandigen Rohrs (1), aufweisend:
Bereitstellen eines Außenrohrs (10), das einen Innendurchmesser (A_{ID}) aufweist,
Bereitstellen eines Innenrohrs (20), das einen Außendurchmesser (I_{AD}) aufweist,
Anordnen des Innenrohrs (20) innerhalb des Innendurchmessers (A_{ID}) des Außenrohrs (10), so dass zwischen dem Innendurchmesser (A_{ID}) des Außenrohrs (10) und dem Außendurchmesser (I_{AD}) des Innenrohrs (20) ein rohrförmiger Zwischenraum (ZR) gebildet wird,
Anordnen eines den Zwischenraum (ZR) radial ausfüllenden Distanzelements (40) zwischen Innenrohr (20) und Außenrohr (10) an wenigstens einer Stelle entlang einer Axialrichtung (AR) des doppelwandigen Rohrs (1), wobei jedes Distanzelement (40) in Axialrichtung (AR) nur einen Teil des Zwischenraums (ZR) ausfüllt, und
Biegen des doppelwandigen Rohrs (1) quer zur Axialrichtung (AR) an wenigstens einer mit Distanzelement (40) versehenen Stelle,
**dadurch gekennzeichnet, dass** jedes Distanzelement (40) aus offenporigem Metallschaum hergestellt wird.

7. Verfahren gemäß Anspruch 6, wobei entlang der Axialrichtung (AR) ein Leckage-Detektionsanschluss (50), insbesondere ein einziger Leckage-Detektionsanschluss (50), vorgesehen wird, so dass ein Medienübertritt von einen Innenraum (21) des Innenrohrs (20) in den Zwischenraum (ZR) detektierbar ist.

8. Verfahren gemäß einem der Ansprüche 6 bis 7, wobei das Außenrohr (10) mit einem Außendurchmesser (A_{AD}) von größer 70 mm, insbesondere größer 100 mm, bereitgestellt wird.

## Claims

1. A double-walled tube (1) with an outer tube (10) which has an inner diameter (A_{ID}) and an inner tube (20), which has an outer diameter (I_{AD}) and which is arranged within the inner diameter (A_{ID}) of the outer tube (10), so that between the inner diameter (A_{ID}) of the outer tube (10) and the outer diameter (I_{AD}) of the inner tube (20) a tubular intermediate space (ZR) is formed, wherein along an axial direction (AR) of the double-walled tube (1) at least one bending location (30) is provided, in which a spacer element (40) radially filling out the intermediate space (ZR) is provided between inner tube (20) and outer tube (10), and wherein each spacer element (40) in axial direction (AR) fills out only a part of the intermediate space (ZR),
**characterized in that** each spacer element (40) is formed open-porous metal foam.

2. The double-walled tube (1) according to Claim 1, wherein along the axial direction (AR) a leakage detection connection (50), in particular a single leakage detection connection (50) is provided, so that a media passage from an interior space (21) of the inner tube (20) into the intermediate space (ZR) is detectable.

3. The double-walled tube (1) according to any one of the Claims 1 to 2, wherein the outer tube (10) has an outer diameter (A_{AD}) that is greater than 70 mm.

4. The double-walled tube (1) according to Claim 3, wherein the outer diameter (A_{AD}) of the outer tube (10) is greater than 100 mm.

5. Use of a double-walled tube (1) according to any one of Claims 1 to 4 as fluid line.

6. A method for producing a double-walled tube (1) comprising:
providing an outer tube (10) having an inner diameter (A_{ID}),
providing an inner tube (20) having an outer diameter (I_{AD}),
arranging the inner tube (20) within the inner diameter (A_{ID}) of the outer tube (10) so that between the inner diameter (A_{ID}) of the outer tube (10) and the outer diameter (I_{AD}) of the inner tube (20) a tubular intermediate space (ZR) is formed,
arranging a spacer element (40) radially filling out the intermediate space (ZR) between inner tube (20) and outer tube (10) in at least one location along an axial direction (AR) of the double-walled tube (1), wherein each spacer element (40) in axial direction (AR) fills out only a part of the intermediate space (ZR), and
bending of the double-walled tube (1) transversely to the axial direction (AR) in at least one location provided with spacer element (40),
**characterized in that** each spacer element (40) is produced from open-porous metal foam.

7. The method according to Claim 6, wherein along the axial direction (AR) a leakage detection connection (50), in particular a single leakage detection connection (50) is provided, so that a media transfer from an interior space (21) of the inner tube (20) into the intermediate space (ZR) is detectable.

8. The method according to any one of the Claims 6 to 7, wherein the outer tube (10) is provided with an outer diameter (A_{AD}) that is greater than 70 mm, in particular greater than 100 mm.

## Revendications

1. Tuyau à double paroi (1) comportant une paroi extérieure (10), qui présente un diamètre intérieur (A_{ID}), et un tuyau intérieur (20), qui présente un diamètre extérieur (I_{AD}) et qui est disposé à l'intérieur du diamètre intérieur (A_{ID}) du tuyau extérieur (10), de sorte qu'entre le diamètre intérieur (A_{ID}) du tuyau extérieur (10) et le diamètre extérieur (I_{AD}) du tuyau intérieur (20) un espace intermédiaire tubulaire (ZR) est formé, dans lequel le long d'une direction axiale (AR) du tuyau à double paroi (1) au moins un emplacement de flexion (30) est prévu, sur lequel un élément écarteur (40) remplissant axialement l'espace intermédiaire (ZR) est prévu entre le tuyau intérieur (20) et le tuyau extérieur (10), et dans lequel chaque élément écarteur (40) remplit dans la direction axiale (AR) seulement une partie de l'espace intermédiaire (ZR),
**caractérisé en ce que** chaque élément écarteur (40) est formé par une mousse métallique à pores ouverts.

2. Tuyau à double paroi (1) selon la revendication 1, dans lequel le long de la direction axiale (AR) un raccord de détection de fuite (50), notamment un raccord de détection de fuite unique (50), est prévu, de sorte qu'une infiltration de milieu depuis un espace intérieur (21) du tuyau intérieur (20) dans l'espace intermédiaire (ZR) puisse être détecté.

3. Tuyau à double paroi (1) selon une des revendications 1 à 2, dans lequel le tuyau extérieure (10) présente un diamètre extérieur (A_{AD}) supérieur à 70 mm.

4. Tuyau à double paroi (1) selon la revendication 3, dans lequel le diamètre extérieur (A_{AD}) du tuyau extérieur (10) est supérieur à 100 mm.

5. Utilisation d'un tuyau à double paroi (1) selon une des revendications 1 à 4 come conduite de fluide.

6. Procédé de fabrication d'un tuyau à double paroi (1), présentant :
la fourniture d'un tuyau extérieur (10), qui présente un diamètre intérieur (A_{ID}),
la fourniture d'un tuyau intérieur (20), qui présente un diamètre extérieur (I_{AD}),
la disposition du tuyau intérieur (20) à l'intérieur du diamètre intérieur (A_{ID}) du tuyau extérieur (10), de sorte qu'entre le diamètre intérieur (A_{ID}) du tuyau extérieur (10) et le diamètre extérieur (I_{AD}) du tuyau intérieur (20) un espace intermédiaire tubulaire (ZR) soit formé,
la disposition d'un élément écarteur (40) remplissant axialement l'espace intermédiaire (ZR) entre le tuyau intérieur (20) et le tuyau extérieur (10) à au moins un emplacement le long d'une direction axiale (AR) du tuyau à double paroi (1), dans lequel chaque élément écarteur (40) remplit dans la direction axiale (AR) seulement une partie de l'espace intermédiaire (ZR), et
fléchir le tuyau à double paroi (1) transversalement à la direction axiale (AR) à au moins un emplacement pourvu de l'élément écarteur (40),
**caractérisé en ce que** chaque élément écarteur (40) est fabriqué dans une mousse métallique à pores ouverts.

7. Procédé selon la revendication 6, dans lequel le long de la direction axiale (AR) un raccord de détection de fuite (50), notamment un raccord de détection de fuite unique (50), est prévu, de sorte qu'une infiltration de milieu depuis un espace intérieur (21) du tuyau intérieur (20) puisse être détecté dans l'espace intermédiaire (ZR).

8. Procédé selon une des revendications 6 à 7, dans lequel le tuyau extérieur (10) est fourni avec un diamètre extérieur (A_{AD}) supérieur à 70 mm, notamment supérieur à 100 mm.
